# EUROPEAN PATENT SPECIFICATION

(11) **EP 1 128 735 B1**
(45) Date of publication and mention of the grant of the patent: **26.03.2003**
(21) Application number: 99958718.1
(22) Date of filing: 02.11.1999
(51) Int. Cl.: A23G 3/00

(54) **NON-STICK SOFT CONFECTIONERY COMPOSITION AND METHODS OF MAKING THE SAME**
NICHT KLEBENDE WEICHE SÜSSWAREN-ZUSAMMENSETZUNG UND METHODEN ZU DESSEN HERSTELLUNG
COMPOSITION DE CONFISERIE MOLLE ET NON-COLLANTE ET SES PROCEDES DE FABRICATION

(30) Priority: 13.11.1998 US 108299 P
(43) Date of publication of application: 05.09.2001
(73) Proprietor: WARNER-LAMBERT COMPANY, Morris Plains, New Jersey 07950 (US)
(72) Inventor: ABDEL-MALIK, Magdy, Malak, Chester, NJ 07930 (US); D'OTTAVIO, Nick, Hackettstown, NJ 07840 (US); PETTIGREW, Susan, Montebello, NY 10901 (US); SLATKAVITZ, Christine, Montville, NJ 07045 (US); LEE, Jean, Bridgewater, NJ 08807 (US)
(74) Representative: Mansmann, Ivo
(86) International application number: US9925568
(87) International publication number: WO00028833

(56) References cited:
- EP-A- 0 273 001
- WO-A-98/15189
- US-A- 4 241 091
- US-A- 4 582 707
- US-A- 5 482 722
- US-A- 5 532 017

## Description

### BACKGROUND OF THE INVENTION

### Field Of The Invention:

The present invention relates to the formation of a non-stick, soft confectionery composition, especially to a nougat composition which includes a combination of insoluble and soluble components. The composition has texture, body and other desirable properties of a confectionery composition as well as sufficient non-stick domains or regions to provide the composition with non-stick properties and is as defined by the appended claims.

### Description Of The Prior Art:

Confectionery products such as nougats are aerated confections whose density largely depends on a whipping or frappe component and whose texture largely depends on an amorphous sugar (bob syrup) component along with its subsequent crystallization. The bob syrup component is comprised mainly of glucose syrup (e.g. corn syrup) and sucrose, heated to temperatures above 120° C to remove water and to form a molten candy. The relatively light textured frappe is generally prepared from whipping agents such as gelatin, egg albumin, milk proteins such as casein, dextrin, and vegetable proteins such as soy protein, and the like, which can be used in combination with starch or gum arabic, which mixture is rapidly mixed at ambient temperature to form an aerated mass. The nougat composition is prepared in either a batch or continuous system by the addition of the bob syrup to the frappe under agitation, at temperatures between 65° C and 120° C to form the basic nougat mixture. An alternative method does not aerate the whipping component prior to mixing with the bob syrup but adds the whipping agent, in solution, to the bob syrup which mixture is aerated at high speeds. Further ingredients such as flavorings, fats and oils, colorants, additional sugar and the like may be added thereafter also under agitation. The resulting mixture is then shaped and allowed to cool.

Nougats have a range of textures that can vary between a long-chew, low-grained product and a short-chew, high-grained product. The texture of nougat is influenced by factors such as the sugar to glucose syrup ratio, the amorphous to crystalline phase ratio, the liquid phase to solid phase ratio, the moisture content, the type of whipping agent, the aeration process and the presence and type of additives. Typically long-chew nougat contains a higher percentage of a low moisture, amorphous sugar, whereas short-chew nougat contains a higher percentage of crystalline sugar.

The preparation of nougats is disclosed in "Choice Confections", Walter Richmond (Chapter 14), pp. 251-267, Manufacturing Confectionery Publishing Company (1954), incorporated herein by reference.

Many soft confectionery compositions and especially nougats are known to stick to teeth and denture material. It is a common occurrence that the soft chewy texture of nougat when applied to tooth enamel or denture material is difficult to remove and therefore problematical for many individuals including those who wear dentures.

Efforts have been made to provide confectionery compositions with non-stick properties. For example, Richard B. Cook, U.S. Patent No. 5,482,722 discloses a confectionery composition employing a proteinaceous chewable base which contains prolamine having a texturizing agent entrapped therein in which the prolamine is first solubilized and then co-precipitated with the texturizing agent such as a food grade organic acid and the like.

Japanese Patent Publication No. JP62/257,347 discloses the preparation of a non-stick nougat by interposing a thin layer of a polysaccharide such as pullulan between a nougat layer and a jelly layer.

Japanese Patent Publication No. JP63/296,652 discloses a candy composition employing xanthan gum and cyclodextrin or dextrin and cane sugar fatty acid ester in maltotetraose to provide non-stick properties.

Japanese Patent Publication No. JP52/120,168 discloses a chewing gum-like food containing nougat which contains fibrous milk protein, a non-edible chewing gum base and/or edible nougat along with sweetener and flavoring as the major components.

Despite these efforts, it has been difficult to provide a soft confectionery composition, such as a nougat, with both non-stick properties and the texture, body and mouthfeel normally associated with user acceptable confectionery compositions that do not possess non-stick properties.

It would therefore be a significant advance in the art of developing confectionery products such as nougats to provide such products with non-stick properties while maintaining the sensory properties associated with conventional, commercial, confectionery products.

### Summary Of The Invention

The present invention is directed to a non-stick soft confectionery composition in which the combination of ingredients provides the product with non-stick properties as well as the same or similar sensory properties normally associated with conventional confectionery compositions. The present invention is also directed to methods of making the confectionery products as, for example, methods of making a nougat compositional is as defined by the appended claims.

In one aspect of the present invention, there is provided a non-stick, soft confectionery composition comprising:
an effective amount of a confectionery base, an effective amount of a combination of insoluble and soluble components to provide sufficient non-stick domains within the composition such that the composition does not readily stick to a substrate such as tooth enamel or denture material (i.e. possesses non-stick properties).

The composition of the present invention provides non-stick properties to the confectionery product and provides texture, body and cohesion of sufficient quality that the present confectionery composition has the same or similar sensory properties typically associated with conventional confectionery compositions.

### Detailed Description Of The Invention

The present invention is generally directed to a soft confectionery composition and methods of making the same to provide a non-stick product. As used herein the term "confectionery composition" shall be defined in its customary broad sense and includes edible compositions made from a confectionery base. As used herein the term "soft confectionery composition" shall mean chewable confectionery compositions which include fondants, soft toffees, caramels, fudge, marshmallow, gums, jellies and nougats. Nougat is a preferred soft confectionery composition of the present invention. The term "confectionery base" is given its common meaning. The confectionery base employed in the present invention includes sugar (e.g. sucrose) a source of glucose, moisture and optionally fat and/or oil. A discussion of confections including soft confections is disclosed in "Foods and Food Production Encyclopedia", Douglas Considine, Editor-in Chief, Van Nostrand Reinhold Company, 1982, pgs. 475-480, incorporated herein by reference.

The present composition exhibits domains or regions which do not readily stick to substrates such as tooth enamel and denture material. A "non-stick domain" is defined as an area of the soft confectionery composition that at least does not substantially stick to a targeted substrate (e.g. denture material). The non-stick domains occupy only a portion of the total volume of the soft confectionery composition. The non-stick domains are spaced apart from each other (dispersed) but are sufficiently close so that the overall affect of the composition is not to stick to the substrate. The size of the non-stick domains and the total area of the domains dispersed within a soft confectionery composition of the present invention is sufficient to prevent the composition from sticking to any appreciable extent to the substrate.

The non-stick domains can vary in size. The size of the domains must not be so large that a graininess sensation can be detected when chewing the product. On the other hand, the domains must be sufficiently large in overall surface area to at least substantially prevent the product from sticking to the substrate such as tooth enamel or denture material. The non-stick domains are in the form of particles typically having a particle size of from about 15 to 20 µ.

The soft confectionery composition of the present invention employs a base, optionally a frappe including a whippable protein, and both soluble and insoluble components sufficient to provide the desired non-stick domains while achieving sensory properties akin to conventional, commercial acceptable confectionery compositions which do not exhibit non-stick properties.

The confectionery base as previously described has a syrup phase typically containing sucrose and glucose and other carbohydrates or possibly modified carbohydrates such as polydextrose, sorbitol and hydrogenated starch hyrolysates. For nougats a fat and/or oil (e.g. hydrogenated vegetable oil) is typically dispersed through the syrup and sometimes emulsified with it. Although the fat and/or oil component does not form the main structure of such confectionery compositions, it does influence texture and mouthfeel and is used to lubricate the composition to modify "stickiness" although the presence of fat and/or oil alone does not provide non-stick properties. The typical amount of a confectionery base in a nougat composition is from about 70 to 90% by weight based on the total weight of the soft confectionery composition.

For nougats, the soft confectionery composition will typically include a whippable component such as a frappe. The frappe will contain a whippable protein such as egg albumin, gelatin, combinations thereof and the like. Also included are conventional frappe ingredients including gums, such as gum arabic, glucose (e.g. corn syrup) and water. Other conventional ingredients which may be employed in the frappe are well known to those of ordinary skill in the art.

The proteins employed in the frappe component are soluble proteins. The amount of the protein component is typically from about 1 to 3% by weight, preferably from about 1 to 2% by weight based on the total weight of the nougat composition. The protein portion of the traditional nougat composition provides two functions. The first function is to provide a film for the glucose, sugar, fat and/or oil components. Since the glucose and fat are incompatible, the protein component (e.g. gelatin) is used as a compatibilizer.

The second function of the protein is to provide a "bounciness" sensation to the candy. "Bounciness" is the sensory property whereby there is a sense that a force from chewing applied to the candy will result in some force in the reverse direction of the chewing action. Milk protein (e.g. demineralized whey protein) has high "bounciness" properties and is one of the preferred proteins employed in the present invention and most preferably in combination with gelatin.

The moisture content of confectionery compositions and especially nougats range from about 4 to 5% for long chew nougats and up to 12 to 15% for short chew nougats.

As previously indicated, the present invention requires the combination of soluble and insoluble components in an amount sufficient to provide the requisite presence of non-stick domains to provide the composition with non-stick properties with sensory properties at least similar to commercially acceptable confectionery compositions. The terms "soluble" and "insoluble" are given their common meaning.

The soluble components may be selected from edible materials which solubilize upon chewing and include hydrocolloids particularly the polysaccharides. The amount of the soluble components used in the present composition is from about 0.05 to 7.0% by weight, preferably from about 0.5 to 2.5% by weight based on the weight of the confectionery composition. The most preferred class of soluble components are the polysaccharides, especially corn starch and rice starch because of their high amylopectin content. The polysaccharide component provides compatibility with the sugar portion of the confectionery composition (i.e. present in the bob) and in addition provides a sufficient number of non-stick domains to assist in providing the composition with non-stick properties, especially short term. In addition, the polysaccharides contribute to the stability of the confectionery composition because such ingredients control water mobility.

Specific examples of soluble components which may be incorporated into the confectionery composition include carboxymethylcellulose (CMC), xanthan gum, carrageenan, alginates and the like and combinations thereof.

In addition to a soluble component as described above, the present invention is provided with an insoluble component selected from such ingredients as insoluble polysaccharides and denatured proteinaceous materials. The preferred insoluble polysaccharide materials are insoluble cellulose materials, especially microcrystalline cellulose.

The preferred amount of the insoluble component is typically from about 0.5 to 5.0% by weight, preferably from about 2.0 to 5.0% by weight based on the total weight of the confectionery composition.

The insoluble component remains solid during consumption of the confectionery composition and is not materially affected by water such as from saliva. Therefore, the insoluble component can continue to provide non-stick domains in a confectionery composition throughout the life of the chewable composition and therefore assists in providing long chew properties as well. Thus, while the soluble components forming non-stick domains tend to leach out of the mass while the confectionery composition is being chewed (i.e. provide short-term non-stick domains), the insoluble component provides an essential back up supply of non-stick domains to maintain the non-stick properties of the confectionery composition during chewing over an extended, long chew period of time.

The insoluble component (e.g. the insoluble cellulose component) also gives dimensional stability to the composition by providing a physical structure in the form of a "webbing" much like the fiber in fiberglass. The webbing provides a network around which the components of the confectionery composition are firmly held in place to thereby enable the composition to maintain its dimensional stability during chewing. The insoluble component also provides cohesive properties to the composition whereby the composition tends to remain as a single bolus. This exposes less surface area to the substrate (e.g. denture material) and thus indirectly assists in rendering the composition non-stick. In addition, the insoluble component aids in the manufacturing process of the confectionery composition by stabilizing the ingredients as they are being formulated into the final composition.

As previously indicated, the insoluble component may include a denatured protein. Proteins are typically water soluble. However, the denaturing process renders the protein water-insoluble.

Denaturation is defined herein as "any modification of the secondary, tertiary or quaternary structure of a protein molecule, that does not break covalent bonds". A change in the protein structure is usually associated with some changes in at least one of the physical, chemical or functional properties of the protein including rendering the water soluble protein insoluble.

The degree of change in structure and thus the properties of proteins depend in part on the manner in which proteins are denatured. Among the most important changes in proteins as a result of denaturation are:
(1) decrease in solubility,
(2) loss of biological activity,
(3) increase in reactivity of constituents groups, and
(4) changes in molecular shape and size.

Denaturation can be brought about by the application of physical, chemical and biological methods. Physical methods include heating, freezing, application of surface forces, sound waves, grinding, pressure, and radiation including ultraviolet and ionization radiation. Chemical methods include employing chemical agents such as solvents, pH adjusters, and salts. Biological methods include the use of proteolytic enzymes.

Protein denaturation brought about by heating, usually within the range of from about 55 to 75° C, conventionally requires the use of a solvent to, inter alia, avoid concomitant decomposition of the polypeptide chain, and to preferably provide a dilute solution to avoid intermolecular interactions of the denatured protein. Aqueous, non-aqueous and aqueous-alcohol solutions have all been used.

A general discussion of proteins including classifications of proteins may be found in John M. deMan, "Principles Of Food Chemistry" 2nd Edition, Van Nostrand Reinhold, New York, NY, (1990) at pages 89 & ff, and Grant & Hackh's Chemical Dictionary, 5th Edition, McGraw-Hill, Inc., New York, NY (1987) pages 477-478, each of which is incorporated herein by reference.

A preferred denatured protein is provided as a plasticized proteinaceous material which is derived from the combination or blend of at least one protein (i.e. a protein component) and at least one plasticizer (i.e. a plasticizer component) which have been preferably matched so that the end product (plasticized proteinaceous material) can be especially effectively used in a confectionery composition. The plasticized proteinaceous material provides the confectionery composition with suitable texture, body and cohesion and thereby provides the confectionery composition with sensory properties which are the same or similar to conventional confectionery compositions including nougats.

The plasticized proteinaceous material can be made in a variety of ways. A particularly preferred method is to heat the blend of the protein component and the plasticizer component under controlled shear conditions, preferably at a temperature of from about 20° C to about 140° C, preferably from about 90° to 110°C.

The selection and matching of a suitable protein component and a suitable plasticizer component can be made by considering the respective solubility parameters as well as the free volume and glass transition temperature of the blend as discussed in detail in pending U.S. Patent Application Serial No. 08/936,570 filed September 24,1997, the entire content of which is incorporated herein by reference.

The preferred process for forming the plasticized proteinaceous material denatures the protein component in a melt state, i.e., a protein component in the form of a viscous liquid. More specifically, the process comprises the heating under controlled shear conditions the blend of the protein component and the plasticizer component preferably in the solid state prior to processing, such that upon cooling, the plasticizer component becomes entrapped within a denatured matrix of the protein component.

A suitable denatured protein which may be used as an insoluble component in the present invention is demineralized whey protein. This type of protein has little, if any taste and therefore can be mixed with a variety of flavors without adversely affecting the taste of the confectionery composition while providing assistance in obtaining non-stick properties. Demineralized whey protein can be formed into a plasticized proteinaceous material by combining with a suitable plasticizer such as glycerol in a method as previously described.

The invention is illustrated by the following non-limiting examples.

### EXAMPLE 1

### Nougat Formulation

Soft nougat confectionery products in accordance with the present invention were prepared from the ingredients shown below:

| INGREDIENT | % BY WEIGHT |
|---|---|
| frappe | |
| Gelatin | 1.13 |
| Gum Arabic | 0.34 |
| Corn Syrup 44Be | 16.36 |
| Water | 1.75 |

| bob | |
|---|---|
| Granulated Sugar | 38.87 |
| Corn Syrup 44Be | 30.07*-X |
| Hydrogenated Vegetable Oil | 5.5 |
| Flavor | 0.50 |
| Whey Protein Isolate/Glycerol | 1.83 |
| Pulverized sugar | 2.74 |
| Microcrystalline Cellulose | 0.91 |
| Soluble Component* (selected from those in Table 1) | X |

| | |
|---|---|
| * Amount of corn syrup in the bob is reduced by the amount of the soluble component. | |

A frappe was formed by adding the gelatin to hot tap water and mixing until dissolved. The solution was allowed to stand for 30 minutes. Gum arabic was added to cold tap water and treated in the same manner as the gelatin. The gelatin and gum arabic solutions were added to warm 44Be corn syrup in a Hobart mixer and mixed therein at low and then moderate speeds for a total of 4 minutes.

A bob syrup was prepared by mixing the 44Be corn syrup, the granulated sugar and water. The mixture was heated at 130° C.

The bob syrup was slowly added to the frappe under mixing for about 5 minutes. Cellulose powder (e.g. microcrystalline cellulose) was added under mixing for 2 minutes followed by the addition of sugar and at least one, preferably a combination of the soluble components shown in Table 1 below. Thereafter the plasticized proteinaceous material (e.g. whey protein/glycerol) was added under mixing followed by the addition of the sweetener (e.g. pulverized sugar) and flavor components.

The resulting nougats exhibited non-stick properties as well as the properties of conventional nougats including chewability, texture, and cohesion.

**Table 1**

| Soluble Components | |
|---|---|
| Apple pectin | 0.5 - 2.5% by weight |
| Pea Starch | 0.5- 1.5% by weight |
| Miragel starch | 0.25 - 2.0% by weight |
| Methy cellulose | 0.25 - 2.0% by weight |
| Egg Albumin | 1.0 - 7.0% by weight |
| Gelatin | 1.0 - 7.0% by weight |

### EXAMPLE 2

Example 1 was repeated to make a nougat composition except that the amount of corn syrup in the bob was 32.16% by weight and the amount of the microcrystalline cellulose was 3.0% by weight. As in Example 1, the amount of the corn syrup in the bob was reduced by the amount of the soluble component used.

The resulting nougat composition exhibited non-stick properties as well as the properties of conventional nougats including chewability, texture and cohesion.

### EXAMPLE 3

Example 1 was repeated to make a nougat composition except that the amount of corn syrup in the bob was 33.24% by weight and the amount of the whey protein was 5.0% by weight. As in Example 1, the amount of the corn syrup in the bob was reduced by the amount of the soluble component.

The resulting nougat composition exhibited non-stick properties as well as the properties of conventional nougats including chewability, texture and cohesion.

## Claims

1. A non-stick soft confectionery composition comprising
from 70 to 90% by weight of a confectionery base,
from 0,05 to 7% by weight of a soluble component and 0,5 to 5% by weight of an insoluble component
wherein the non-stick forming domains consisting of the said soluble and the said insoluble components have a particle size of 15 to 20µ.

2. A composition of claim 1, wherein the confectionery base comprises a sugar as e.g. sucrose and a source of glucose and moisture. The soluble component comprises a hydrocolloid particularly polysaccharides or carboxymethylcellulose, xanthan gum, carrageenan alginates and combinations thereof and the insoluble component comprises a denatured protein or an insoluble particularly cellulose material or polysaccharide.

3. A composition of claims 1 to 2 wherein the denatured protein is a plasticized proteinaceous material.

4. A composition of claim 3 wherein the plasticized proteinaceous material is being formed by heating a blend of at least one solid protein component and at least one plasticizer component under controlled shear conditions, in a melt state at a temperature of from 20°C to 140°C wherein upon cooling, the plasticizer component becomes entrapped within a denatured matrix of the protein component.

5. A composition of anyone of claims 1 to 4 wherein the insoluble component comprises an insoluble cellulose material.

6. A composition of claim 5, wherein the insoluble cellulose material is microcrystalline cellulose.

7. A composition of claim 5, wherein the insoluble component comprises a denatured protein.

8. A composition of claim 7, wherein the denatured protein is a plasticized proteinaceous material.

9. A composition of anyone of claims 1 to 8, wherein the soluble component is a hydrocolloid.

10. A composition of claim 9 wherein the hydrocolloid is a polysaccharide.

11. A composition of claim 9 wherein the polysaccharide is selected from corn starch and rice.

12. A composition of claim 1 or 2 wherein the soluble component is selected from the carboxymethylcellulose, xanthan gum, carrageenan alginates and combinations thereof.

13. A composition of anyone of claims 1 to 12 containing a frappe.

14. A composition of claim 13 wherein the frappe comprises a whippable soluble protein.

## Patentansprüche

1. Nicht-klebende weiche Süßwarenzusammensetzung, die umfasst:
70 - 90 Gew.-% einer Süßwarengrundlage,
0,05 - 7 Gew.-% einer löslichen Komponente und
0,5 - 5 Gew.-% einer unlöslichen Komponente,
wobei die aus der löslichen und der unlöslichen Komponente bestehenden Nicht-Klebrigkeit verleihenden Bereiche eine Teilchengröße von 15 - 20 µm aufweisen.

2. Zusammensetzung nach Anspruch 1, wobei die Süßwarengrundlage einen Zucker, wie Saccharose, und eine Quelle für Glucose und Feuchtigkeit umfasst. Die lösliche Komponente umfasst ein Hydrokolloid, spezielle Polysaccharide oder Carboxymethylcellulose, Xanthangummi, Karrageenalginate und Kombinationen derselben, und die unlösliche Komponente umfasst ein denaturiertes Protein oder ein unlösliches spezielles Cellulosematerial oder Polysaccharid.

3. Zusammensetzung nach den Ansprüchen 1 und 2, wobei das denaturierte Protein ein plastifiziertes proteinhaltiges Material ist.

4. Zusammensetzung nach Anspruch 3, wobei das plastifizierte proteinhaltige Material gebildet wird durch Erhitzen eines Gemischs aus mindestens einer festen Proteinkomponente und mindestens einer Weichmacherkomponente unter gesteuerten Scherbedingungen in geschmolzenem Zustand bei einer Temperatur von 20 - 140 °C, wobei die Weichmacherkomponente beim Abkühlen in einer denaturierten Matrix der Proteinkomponente eingefangen wird.

5. Zusammensetzung nach einem der Ansprüche 1 bis 4, wobei die unlösliche Komponente ein unlösliches Cellulosematerial umfasst.

6. Zusammensetzung nach Anspruch 5, wobei das unlösliche Cellulosematerial mikrokristalline Cellulose ist.

7. Zusammensetzung nach Anspruch 5, wobei die unlösliche Komponente ein denaturiertes Protein umfasst.

8. Zusammensetzung nach Anspruch 7, wobei das denaturierte Protein ein plastifiziertes proteinhaltiges Material ist.

9. Zusammensetzung nach einem der Ansprüche 1 bis 8, wobei die lösliche Komponente ein Hydrokolloid ist.

10. Zusammensetzung nach Anspruch 9, wobei das Hydrokolloid ein Polysaccharid ist

11. Zusammensetzung nach Anspruch 9, wobei das Polysaccharid aus Maisstärke und Reis ausgewählt ist.

12. Zusammensetzung nach Anspruch 1 oder 2, wobei die lösliche Komponente aus Carboxymethylcellulose, Xanthangummi, Karrageenalginaten und Kombinationen derselben ausgewählt ist.

13. Zusammensetzung nach einem der Ansprüche 1 bis 12, die einen Frappee enthält.

14. Zusammensetzung nach Anspruch 13, wobei der Frappe ein aufschlagbares lösliches Protein umfasst.

## Revendications

1. Composition de confiserie molle non collante, comprenant
70 à 90 % en poids d'une base de produit de confiserie,
0,05 à 7 % en poids d'un constituant soluble et 0,5 à 5 % en poids d'un constituant insoluble,
dans laquelle les domaines non collants consistant en ledit constituant soluble et ledit constituant insoluble ont des dimensions de particules de 15 à 20 µm.

2. Composition suivant la revendication 1, dans laquelle la base de produit de confiserie comprend un sucre tel que, par exemple, le saccharose et une source de glucose et de l'humidité. Le constituant soluble comprend un hydrocolloïde, en particulier des polysaccharides ou les carboxyméthylcelluloses, la gomme xanthane, la carraghénine, des alginates et leurs associations, et le constituant insoluble comprend une protéine dénaturée ou une matière insoluble, en particulier cellulosique, ou bien un polysaccharide.

3. Composition suivant les revendications 1 et 2, dans laquelle la protéine dénaturée est une matière protéique plastifiée.

4. Composition suivant la revendication 3, dans laquelle la matière protéique plastifiée est formée en chauffant un mélange d'au moins un constituant protéique solide et d'au moins un constituant plastifiant dans des conditions de cisaillement contrôlées, à l'état fondu à une température dans l'intervalle de 20 °C à 140 °C, le constituant plastifiant, lors du refroidissement, étant piégé dans une matrice dénaturée du constituant protéique.

5. Composition suivant l'une quelconque des revendications 1 à 4, dans laquelle le constituant insoluble comprend une matière cellulosique insoluble.

6. Composition suivant la revendication 5, dans laquelle la matière cellulosique insoluble consiste en cellulose microcristalline.

7. Composition suivant la revendication 5, dans laquelle le constituant insoluble comprend une protéine dénaturée.

8. Composition suivant la revendication 7, dans laquelle la protéine dénaturée est une matière protéique plastifiée.

9. Composition suivant l'une quelconque des revendications 1 à 8, dans laquelle le constituant soluble est un hydrocolloïde.

10. Composition suivant la revendication 9, dans laquelle l'hydrocolloïde est un polysaccharide.

11. Composition suivant la revendication 9, dans laquelle le polysaccharide est choisi entre l'amidon de maïs et le riz.

12. Composition suivant la revendication 1 ou 2, dans laquelle le constituant soluble est choisi entre la carboxyméthylcellulose, la gomme xanthane, la carraghénine, des àlginates et leurs associations.

13. Composition suivant l'une quelconque des revendications 1 à 12, contenant un constituant frappé.

14. Composition suivant la revendication 13, dans laquelle le constituant frappé comprend une protéine soluble fouettable.
